# NEUE EUROPÄISCHE PATENTSCHRIFT

(11) **EP 4 000 931 B2**
(45) Veröffentlichungstag und Bekanntmachung des Hinweises auf die Entscheidung über den Einspruch: **31.12.2025**
(45) Hinweis auf die Patenterteilung: 14.06.2023
(21) Anmeldenummer: 21212470.5
(22) Anmeldetag: 19.03.2020
(51) Int. Cl.: B41F 13/08, B41F 33/00, B41F 5/24, G01B 11/24, G01B 11/30

(54) **VORRICHTUNG ZUM VERMESSEN VON ERHEBUNGEN DER OBERFLÄCHE EINES ROTATIONSKÖRPERS**
DEVICE FOR MEASURING ELEVATIONS OF THE SURFACE OF A ROTATING BODY
DISPOSITIF DE MESURE DES BOSSES DE LA SURFACE D'UN CORPS ROTATIF

(30) Priorität: 09.05.2019 DE 102019206705
(43) Veröffentlichungstag der Anmeldung: 25.05.2022
(62) Teilanmeldung aus: 20164200.6
(73) Patentinhaber: Heidelberger Druckmaschinen AG, 69115 Heidelberg (DE)
(72) Erfinder: Schwab, Werner, 92699 Bechtsrieth (DE)

(56) Entgegenhaltungen:
- EP-A1- 1 916 102
- WO-A1-2008/049510
- WO-A1-2010/060884
- WO-A1-2013/076526
- WO-A2-2008/049500
- DE-A1- 102004 022 637
- DE-A1- 102008 033 405
- DE-A1- 102014 116 187
- JP-A- 2004 170 394
- US-A- 4 576 482
- US-A1- 2007 240 597
- US-A1- 2014 251 169
- US-B1- 6 191 857
- MICRO-EPSILON: "High-Speed Laser-Mikrometer", QUALITY ENGINEERING.INDUSTRIE, 10 March 2003 (2003-03-10), pages 1 - 2, XP093175944, Retrieved from the Internet <URL:https://quality-engineering.industrie.de/allgemein/high-speed-laser-mikrometer/> [retrieved on 20240313]
- Wikipedia-Artikel „Lichtschranke' vom 24.02.2019

## Beschreibung

### Erfindung

Die Erfindung betrifft eine Vorrichtung mit den Merkmalen des Oberbegriffs von Anspruch 1.

### Technisches Gebiet der Erfindung

Die Erfindung liegt auf dem technischen Gebiet der grafischen Industrie und dort insbesondere im Bereich des Vermessens von Rotationskörpern wie z.B. Zylinder, Walzen, Hülsen, bevorzugt lasergravierte Flexo-Druckhülsen, oder Platten, bevorzugt auf Hülsen montierten Flexo-Druckplatten. Beim Vermessen werden Erhebungen des Rotationskörpers erfasst.

### Stand der Technik

Die DE3302798A1 offenbart das Erfassen der Flächendeckung bzw. der druckenden und nichtdruckenden Stellen im Zusammenhang mit der Registervoreinstellung zum Verkürzen der Einrichtezeit.

Die DE102014215648A1 offenbart eine Rotationsdruckmaschine mit einem zentralen Gegendruckzylinder, welcher um eine Drehachse drehbar ist, mindestens einem, vorzugsweise mehreren Druckdecks, welche um den zentralen Gegendruckzylinder herum angeordnet sind, wobei jedes Druckdeck eine Druckwalze mit einer Referenzmarke aufweist, und mindestens einem Sensor zum Detektieren der Referenzmarke. Der Sensor ist dabei an einer separaten Dreheinrichtung angeordnet, mittels welcher der Sensor um die Drehachse drehbar ist.

Die EP3251850 offenbart einen so genannten Mounter zur Bestimmung von Registerdaten eines mit einer Druckform und mit einer Registermarke versehenen Sleeves einer Flexodruckmaschine, mit einer Welle, auf der der Sleeve fixierbar ist, mit einer Erfassungseinheit, z.B. ein 3D-Scanner, zum Abtasten des Oberflächenprofils der Druckform, und mit einer Recheneinheit, in der das abgetastete Oberflächenprofil der Druckform einem abgespeicherten Sollprofil zugeordnet und in Abhängigkeit von der Zuordnung die Registerdaten mit Bezug auf die Registermarke berechnet werden.

Die DE102006060464A1 (und ebenso die WO 2008/049500 A2 derselben Patentfamilie) offenbart eine Rotationsdruckmaschine mit einer Anzahl von Farbdecks, von denen wenigstens eines eine Walze, z.B. eine Flexodruckzylinder oder eine Rasterwalze, und ein Einstellsystem für die Einstellung der Position der Walze relativ zu wenigstens einem anderen Bauteil der Druckmaschine aufweist. Das wenigstens eine Farbdeck weist dabei eine Steuereinheit auf, die dazu eingerichtet ist, Daten über die Walze zu empfangen und zu verarbeiten, die die Topografie der Oberfläche dieser spezifischen Walze und/oder eine räumliche Beziehung zwischen einem Druckmuster und einer auf der Walze gebildeten Referenzmarke beschreiben. Die Steuereinheit ist weiterhin dazu ausgebildet, das Einstellsystem in Übereinstimmung mit diesen Einstelldaten anzusteuern, um so die Walze auf eine optimale Position zum Drucken ohne oder zumindest mit vermindertem Ausschuss einzustellen. Die Bestimmung bzw. Abtastung der Topografie der Zylinderoberfläche kann mit einem bewegten Laserkopf (für Lasertrianguation oder Laserinterferometrie) erfolgen. Ein Ziel ist es, den Soll-Liniendruck für eine Voreinstellung (oder eine Registereinstellung) zu bestimmen und darauf basierend die Produktion von Makulatur zu vermeiden. Hierzu dienende Einstellwerte können auf einem RFID-Chip gespeichert werden. Auch die Bestimmung druckender und nichtdruckender Bereiche ist möglich. Die DE202007004717U1 derselben Patentfamilie offenbart als Alternativen für das Abtasten der Topografie Abrolltasten als Sensor oder das Vermessen mittels eines Lasermikrometers als Sensor nach dem Abschattungsprinzip. Die CN102381013A derselben Patentfamilie offenbart ein Verfahren zum Einstellen eines Druckplattenzylinders und einer Prägewalze in einer Rotationsdruckmaschine mit den Schritten: Drehbare Montage des Druckplattenzylinders; Abtasten der Umfangsfläche des Druckplattenzylinders; Ableiten und Speichern von Daten, die zum Einstellen des Druckplattenzylinders verwendet werden; Drehbare Montage der Prägewalze; Abtasten der Umfangsfläche der Prägewalze; Ableiten und Speichern von Daten, die zum Einstellen der Prägewalze verwendet werden, aus dem Aussehen der Oberfläche der Prägewalze und Abspeichern der Einstelldaten; Montage des Druckplattenzylinders und der Prägewalze in der Druckmaschine; sowie Einstellen des Druckplattenzylinders und der Prägewalze gemäß der Einstelldaten.

Ein von der Firma Bobst vertriebenes System für das so genannte "Einregistern und Druckbeistellen" namens "smartGPS^{®}" arbeitet mit Abtastrollen, welche die zu vermessende Druckplatte kontaktieren. Es bestehen jedoch Kundenwünsche, Druckplatten kontaktlos und damit in jedem Fall, auch bei sehr feinen Druckpunkten, beschädigungsfrei zu vermessen.

Die WO2010146040A1 offenbart Ähnliches, wobei eine Kamera und ein Auswertealgorithmus in Form eines Soll-Ist-Wert-Vergleichs (gemessene Radien zu theoretischen Radien) zum Einsatz kommen.

Die WO2008049510A1 offenbart Verfahren und eine Vorrichtung zur Überprüfung der Qualität wenigstens eines Druckformzylinders. Eine automatisierte Durchführung der notwendigen Qualitätssicherungsmaßnahmen ist dadurch möglich, dass der Druckformzylinder in eine Erfassungsvorrichtung überführt wird, in der in automatisierter Weise die Oberfläche des Druckformzylinders optisch abgetastet wird und mit automatischen Messinstrumenten der Durchmesser oder Umfang des Druckzylinders und/oder die Oberflächenrauigkeit seiner Oberfläche gemessen werden. Beispielsweise wird das Druckbild auf seine Farbdichte hin überprüft.

Beim Drucken mit von Rasterwalzen eingefärbten, auf Hülsen montierten Flexodruckplatten oder Druckhülsen (Sleeves) sind eine Reihe von veränderlichen Größen bekannt: Varianzen bei der Größe der Rasterwalze, also deren Umfang; Varianzen bei der Stärke der Druckplatte über die Arbeitsbreite und in der Abrollung; Varianzen bei der Hülse über die Arbeitsbreite und beim Rundlauf; Exzentrizität; Varianzen bei der Montage der Druckplatte mittels Klebeband. Der Arbeitsdruck zwischen Rasterwalze und Druckzylinder (mit Hülse, Klebeflächen und Druckplatte) und zwischen Druckzylinder und Gegendruckzylinder (mit dazwischen befindlichem Bedruckstoff) und somit das Druckergebnis kann von diesen Varianzen beeinflusst und insbesondere beeinträchtigt werden.

Die JP 2004 170394 A offenbart eine Vorrichtung zur Inspektion einer Gravur-Druckplatte mit Blick auf Defekte. Dabei kommt eine linienförmige Lichtquelle 14 zum Einsatz. Die dabei eingesetzten Kameras 11 werden durchgängig als Linien-Kameras beschrieben.

Die US 2014/251169 A1 offenbart ein Verfahren zum Einstellen des Abstandes zwischen Zylindern einer Flexodruckmaschine (Aniloxwalze, Formzylinder, Gegendruckzylinder). Dabei kommen Sensoren zum Einsatz. Diese sind auf die Aniloxwalze gerichtet und detektieren auf dieser farbfreie Stellen. Hierzu nehmen die Sensoren Licht auf, welches von der Walze reflektiert wird. Eine Strahlungsquelle wird nirgends genannt. Die Sensoren werden nirgends im Detail und insbesondere nicht als Flächenkameras beschrieben.

Die WO 2008/049510 A1 offenbart ein Verfahren und eine Vorrichtung zur Überprüfung der Qualität eines Druckformzylinders für den Flexodruck. Dabei kann der Zylinder rotiert und optisch abgetastet werden, d.h. er wird mit Licht bestrahlt und das von der Oberfläche reflektierte Licht wird erfasst und ausgewertet. Dabei kann ein Messkopf mit einem auf den Zylinder gerichteten Laserstrahl und einem Spiegel zum Spiegeln des Laserstrahls zu einem Photosensor zum Einsatz kommen; dabei kann ein Schrittmotor den Messkopf vertikal entlang des Zylinders bewegen. Es kann alternativ eine scannende CCD-Kamera und eine Beleuchtungseinrichtung zum Einsatz kommen, welche zusammen mit einer Software ein digitales Bild der Oberfläche liefern. Es kann der Durchmesser oder der Umfang oder die Oberfächenrauhigkeit des Zylinders gemessen werden. Es kann auch die Passergenauigkeit im Zusammendruck von Farbauszügen überprüft werden.

Die DE 698 29 295 T2, Übersetzung der Erteilung EP 1 007 904 A1, offenbart für eine Papiermaschine ein Verfahren und eine Vorrichtung zum kontaktfreien Vermessen einer Außenoberfläche eines drehbaren Messobjekts in Bezug auf seine Zylindrizität und/oder Geradheit relativ zu einer Geradheitsreferenz, insbesondere zu einem Laserstrahl. Die dabei zum Einsatz kommende Messeinrichtung ist nirgends als eine Kamera beschrieben. Als Geradheitsreferenz kommt ein Laserstrahl 58 zum Einsatz. Durch den Laserstrahl unterscheidet sich die Lehre des Dokuments vom darin genannten Stand der Technik, wonach bisher ein gespannter Metalldraht zum Einsatz kam, welcher jedoch durchhängen konnte.

Die US 2007/240597 A1 offenbart ein Verfahren zum Inspizieren eines Druckzylinders und zum Auffinden von Defekten. Dabei wird ein Bereich des Zylinders scannend optisch erfasst und die erfassten Daten werden ausgewertet. Es kann eine Lichtquelle zum Einsatz kommen. Die Vorrichtung zum optischen Erfassen wird nirgends als Flächenkamera beschrieben.

Es sind somit vielfältige Systeme zum Vermessen bekannt. Dennoch verlangt der Markt beständig nach Neuerungen, insbesondere um Druckprodukte von noch höherer Qualität noch schneller und kostengünstiger herstellen zu können. Die bekannten Systeme können diese Forderung nicht immer in vollem Maße erfüllen.

### Aufgabe

Es ist daher eine Aufgabe der Erfindung, eine Verbesserung gegenüber dem Stand der Technik zu schaffen, welche es insbesondere ermöglicht, Erhebungen von Rotationskörpern, wie z.B. Flexo-Druckpunkte einer Flexo-Druckplatte, schnell und hochgenau zu vermessen.

### Erfindungsgemäße Lösung

Diese Aufgabe wird erfindungsgemäß durch eine Vorrichtung nach Anspruch 1 gelöst. Vorteilhafte und daher bevorzugte Weiterbildungen der Erfindung ergeben sich aus den Unteransprüchen sowie aus der Beschreibung und den Zeichnungen.

Eine erfindungsgemäße Vorrichtung zum Vermessen von Erhebungen der Oberfläche eines als Zylinder, Walze, Hülse oder Platte einer Druckmaschine ausgebildeten Rotationskörpers, z.B. einer auf einer Hülse montierten Flexo-Druckplatte, mit einem ersten Motor zum Rotieren des Rotationskörpers um eine Rotationsachse und mit einer Messeinrichtung, wobei die Messeinrichtung zum berührungslosen Vermessen wenigstens eine Strahlungsquelle zum Aussenden von Licht umfasst und wobei durch die Kontur des Rotationskörpers eine Abschattung im ausgesendeten Licht erzeugt wird, zeichnet sich dadurch aus, dass die Messeinrichtung zum berührungslosen Vermessen wenigstens eine Flächenkamera umfasst, dass die Strahlungsquelle einen Lichtvorhang als ausgesendetes Licht erzeugt, und dass die Flächenkamera das ausgesendete Licht ohne die Abschattung durch die Kontur empfängt, dass die Messeinrichtung zum berührungslosen Vermessen ein Referenzobjekt umfasst, dass durch das Referenzobjekt eine Abschattung erzeugt wird und dass die Flächenkamera das ausgesendete Licht ohne die Abschattung durch das Referenzobjekt empfängt, und dass das Referenzobjekt ein linienartiges Objekt ist, welches parallel zur Rotationsachse gespannt ist, oder ein Objekt mit einer Schneide oder ein Balken ist.

Eine Flächenkamera unterscheidet sich von einer Zeilenkamera dadurch, dass nicht nur ein eindimensionaler, lichtempfindlicher Zeilensensor vorhanden ist, sondern dass ein zweidimensionaler, lichtempfindlicher Flächensensor vorhanden ist, wobei der Flächensensor bevorzugt eine Vielzahl von Zeilensensoren umfasst. Die Flächenkamera kann aus einer Anzahl von, z.B. zueinander benachbarten, Zeilenkameras aufgebaut sein.

Die Flächenkamera kann eine Vielzahl von nebeneinander angeordneten Flächenkameras sein. Die Flächenkamera kann (bezüglich eines Zylinders oder eines Trägerzylinder bzw. dessen Achse) in axialer Richtung (in bevorzugt horizontaler Richtung) ortsfest oder beweglich angeordnet sein und/oder die Flächenkamera kann senkrecht zur Achse (in bevorzugt vertikaler Richtung) ortsfest oder beweglich angeordnet sein.

Der Einsatz einer Flächenkamera erlaubt es, sehr schnell und zugleich sehr präzise zu messen.

Die erfindungsgemäße Vorrichtung ermöglicht das berührungslose Vermessen und vermeidet in vorteilhafter Weise mögliche Beschädigungen am zu vermessenden Objekt, insbesondere an weichen Druckpunkten von Flexodruckplatten. Das Vermessen mit Strahlung, insbesondere elektromagnetischer Strahlung, z.B. Licht, erlaubt zudem ein sehr feines Vermessen, was insbesondere bei Vermessen von feinen Druckpunkten von Flexodruckplatten von Vorteil ist.

Eine solche Vorrichtung erlaubt im Einsatz das automatische Vermessen z.B. einer montierten Druckplatte oder montierten Flexodruckplatte oder einer Druckhülse oder einer Flexodruckhülse und infolge ein automatisches Voreinstellen des jeweiligen optimalen Arbeitsdrucks zwischen den am Druckprozess beteiligten Zylindern und/oder Walzen, z.B. einer Rasterwalze, eines Druckzylinders mit der Druckplatte und eines Gegendruckzylinders, ermöglicht. Bei optimalem Arbeitsdruck ergibt sich ein gleichmäßiges Druckbild. In vorteilhafter Weise können durch das Voreinstellen Stillstandszeiten und Anfahrmakulatur reduziert oder gar vermieden werden, z.B. bei einem Druckauftragswechsel.

Eine solche Vorrichtung erlaubt im Einsatz auch das dynamische, von der Produktionsgeschwindigkeit abhängige Einstellen des optimalen Arbeitsdrucks, der optimalen Druckgeschwindigkeit und/oder der optimal angepassten Trocknerleistung. Somit können industriell (automatisiert, wenig Personaleinsatz und günstig), hochwertige Druckprodukte hergestellt werden.

Bei fehlender datentechnischer Vernetzung und/oder großer räumlicher Distanz von Druckvorstufe (z.B. Herstellung von Flexodruckplatten) und Druckstufe (z.B. Drucken mit einer Flexodruckmaschine) kann durch den lokalen Einsatz einer erfindungsgemäßen Vorrichtung dafür Sorge getragen werden, dass alle für das lokale, hochqualitative Drucken benötigten Werte (z.B. der Arbeitsdruck, die Druckgeschwindigkeit und/oder die Trocknerleistung) schnell und präzise generiert sowie bereitgestellt werden.
Das Referenzobjekt kann bevorzugt ein (achsparallel zum Rotationskörper) gespannter Draht sein. Das Referenzobjekt dient beim Vermessen der Erhebungen der Oberfläche als Referenz. Das Referenzobjekt oder wenigstens dessen (achsparallel) Kontur kann von der Flächenkamera miterfasst werden. Beim bevorzugten Einsatz mehrerer benachbarter Flächenkameras können die Bilder der einzelnen Kameras unter Zuhilfenahme des Referenzobjekt bzw. dessen jeweiligen Abbildes (im Kamerabild) in vorteilhafter Weise zueinander ausgerichtet werden. Eine hochgenaue und daher zeitraubende Ausrichtung der Kamera ist damit nicht erforderlich. Ein weiterer Vorteil ist dadurch gegeben, dass beim Einsatz und beim Miterfassen eines Referenzobjekts die zu verarbeitende Datenmenge erheblich reduziert werden kann.
Das Objekt mit einer Schneide kann ein messerartiges Objekt sein. Die Schneide oder eine Kante des Balkens dient dabei als Referenzlinie des Referenzobjekts.

### Weiterbildungen der Erfindung

Eine bevorzugte Weiterbildung der Erfindung kann sich dadurch auszeichnen, dass ein zweiter Motor vorhanden ist, welcher das Verstellen der Messeinrichtung senkrecht zur Rotationsachse ermöglicht.

Eine bevorzugte Weiterbildung der Erfindung kann sich dadurch auszeichnen, dass der zweite Motor (bevorzugt nicht nur die Messeinrichtung, sondern bevorzugt auch) das Referenzobjekt senkrecht zur Rotationsachse verstellt.

Eine bevorzugte Weiterbildung der Erfindung kann sich dadurch auszeichnen, dass ein weiterer zweiter Motor das Referenzobjekt senkrecht zur Rotationsachse verstellt. Der weitere zweite Motor ist dabei nicht der vorgenannte zweite Motor, d.h. es gibt zwei separate zweite Motoren.

Eine bevorzugte Weiterbildung der Erfindung kann sich dadurch auszeichnen, dass die Strahlungsquelle, insbesondere Lichtquelle, wenigstens einen Bereich der Oberfläche bestrahlt, insbesondere beleuchtet.

Eine bevorzugte Weiterbildung der Erfindung kann sich dadurch auszeichnen, dass das Referenzobjekt parallel zur Rotationsachse, insbesondere während der Messung, unbewegt ist. Das Referenzobjekt kann ortsfest angeordnet sein, z.B. kann ein Draht an seinen beiden Enden ortsfest eingespannt sein.

Eine bevorzugte Weiterbildung der Erfindung kann sich dadurch auszeichnen, dass Referenzobjekt eine gespannte Saite oder ein gespannter Draht oder eine gespannte Carbonfaser ist. Bevorzugt ist der Einsatz eines gespannten Drahts. Dieser hat sich in umfangreichen Untersuchungen als eine praktikable und ausreichend präzise technische Lösung dargestellt. Mögliche Schwingungen des Drahtes während der Messung können rechentechnisch kompensiert werden. Beim weniger bevorzugten Einsatz eines Messers oder eines Balkens kann es erforderlich sein, thermische Änderungen (Ausdehnungen) baulich zu kompensieren. Die rechentechnische Kompensation und daher die Nutzung des Drahtes wird der geringen Kosten wegen bevorzugt.

Eine bevorzugte Weiterbildung der Erfindung kann sich dadurch auszeichnen, dass ein dritter Motor vorhanden ist, welcher die Strahlungsquelle, insbesondere Lichtquelle, und die Kamera parallel zur Rotationsachse bewegt. Die Strahlungsquelle, insbesondere Lichtquelle, kann mit der Kamera eine bauliche Einheit bilden, insbesondere in die Kamera integriert sein.

Eine bevorzugte Weiterbildung der Erfindung kann sich dadurch auszeichnen, dass die Messeinrichtung wenigstens einen Reflektor umfasst. Der Reflektor kann sich über die axiale Länge des Trägerzylinders erstrecken. Der Reflektor kann ortsfest angeordnet sein. Der Reflektor kann eine spiegelnde oder Streulicht (weißes Rauschen) erzeugende Folie sein.

Eine bevorzugte Weiterbildung der Erfindung kann sich dadurch auszeichnen, dass die Kamera wenigstens ein gemeinsames Bild, oder eine Bilderfolge oder einen gemeinsamen Film eines axialen Bereichs der Kontur des Rotationskörpers und desselben axialen Bereichs des Referenzobjekts oder dessen Kontur aufnimmt, insbesondere dessen Kontur, welche der Kontur des Rotationskörper zugewandt ist. Ein weiterer Vorteil ist dadurch gegeben, dass beim Einsatz und beim Miterfassen eines Referenzobjekts, bevorzugt dessen Kontur, die zu verarbeitende Datenmenge erheblich reduziert werden kann. Ein auf digitaler Bildverarbeitung basierendes Berechnen der (radialen) Höhen der Erhebungen der Druckform kann den im Bild erkennbaren (radialen) Abstand der Erhebungen (oder deren Kontur) von dem Referenzobjekt (oder dessen zugewandter Kontur) nutzen.

Eine bevorzugte Weiterbildung der Erfindung kann sich dadurch auszeichnen, dass ein Rechner vorhanden ist, welcher das Bild oder eine Bilderfolge oder den Film auswertet und dabei den radialen Abstand einzelner Erhebungen der Oberfläche von der Rotationsachse bestimmt. Die Bilderfolge oder der Film kann z.B. ein oder bis zu 10 oder bis zu 100 Bild/Bilder pro 1 mm Umfang des Rotationsobjekts umfassen. Die Auflösung in axialer Richtung kann zwischen 10.000 und 100.000 Pixel, z.B. 1280 Pixel mal 30 Kameras, also 38.400 Pixel betragen.

Es kann vorgesehen sein, eine sogenannte KI einzusetzen. Diese kann z.B. bei der Datenauswertung großer Datenmengen (große zu vermessende Oberfläche und hohe Auflösung), z.B. beim Bestimmen von Zustellwerten für die Druckbeistellung auf AS (Abkürzung für Antriebsseite) und BS (Abkürzung für Bedienseite), mitwirken oder dies allein durchführen. Sie kann aus bereits ausgeführten Datenauswertungen lernen.

Die Merkmale der Erfindung, der Weiterbildungen der Erfindung und der Ausführungsbeispiele zur Erfindung stellen auch in beliebiger Kombination miteinander vorteilhafte Weiterbildungen der Erfindung dar. Weiterbildungen der Erfindung können zudem die - im obigen Abschnitt "Technisches Gebiet der Erfindung" offenbarten - Einzelmerkmale oder Merkmalskombinationen aufweisen.

### Ausführungsbeispiele zur Erfindung

Die Erfindung und deren bevorzugte Weiterbildungen werden nachfolgend unter Bezug auf die Figuren 1, 2a, 2b, 2c und 5 anhand bevorzugter Ausführungsbeispiele näher beschrieben. Einander entsprechende Merkmale sind in den Figuren mit denselben Bezugszeichen versehen.

Die Zeichnungen zeigen in den Figuren 1, 2a, 2b, 2c und 5 Ansichten von bevorzugten Ausführungsbeispielen der erfindungsgemäßen Vorrichtung, sowie deren Details. Die weiteren Figuren 3a, 3b, 4a und 4b zeigen Vorrichtungen ohne Referenzobjekt, sowie deren Details.

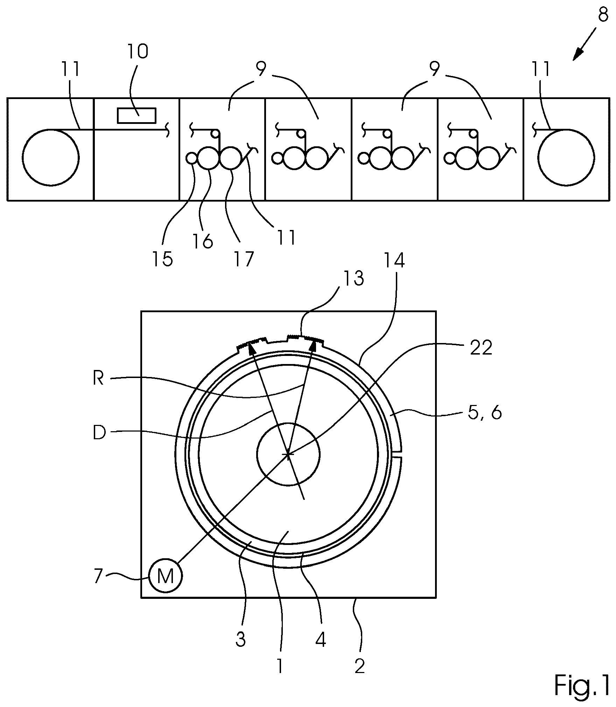

Figur 1 zeigt einen Querschnitt eines rotierbaren Trägerzylinders 1 einer Messstation 2, einer auf dem Trägerzylinder aufgenommenen Hülse 3 und einer auf der Hülse aufgenommenen, bevorzugt mittels eines Klebebands 4 (oder alternativ mittels einer Klebebeschichtung der Hülse) an der Hülse befestigten (so genanntes "Montieren"), zumindest hinsichtlich ihrer Topografie zu vermessenden Druckplatte 5 als Rotationskörper 6. Alternativ kann auf dem Trägerzylinder eine bevorzugt lasergravierte Druckhülse vermessen werden.

Zum Rotieren des Trägerzylinders während des Messens kann in der Messstation ein Motor 7 vorhanden sein. Die Messstation kann Teil eines sogenannten "mounter" (in dem Druckplatten auf Trägerhülsen montiert werden) sein oder kann separat zu einem "mounter" vorgesehen sein. Die Messstation kann separat zu einer Druckmaschine 8 - mit wenigstens einem Druckwerk 9 für die Druckplatte 5 und einem Trockner 10 zum Bedrucken und Trocknen eines bevorzugt bahnförmigen Bedruckstoffs 11 - vorgesehen sein. Die Druckmaschine ist bevorzugt eine Flexodruckmaschine und die Druckplatte somit bevorzugt eine Flexodruckform, z.B. mit einem Durchmesser von 106 mm bis 340 mm. Der Trockner ist bevorzugt ein Heißlufttrockner und/oder ein UV-Trockner und/oder eine Elektronenstrahl-Trockner und/oder ein IR-Trockner. Die Hülse kann seitlich auf den Trägerzylinder aufgeschoben werden. Der Trägerzylinder kann Öffnungen in seiner Mantelfläche aufweisen, aus welchen - zum Weiten der Hülse und zum Erzeugen eines Luftkissens beim Aufschieben - Druckluft ausgestoßen werden kann. Die Hülse mit der Druckplatte kann nach dem Messen aus dem Messgerät entnommen und in der Druckmaschine auf einen Druckzylinder des Druckwerks aufgeschoben werden. Alternativ zum Pneumatik-Spannsystem kann auch ein Hydraulik-Spannsystem verwendet werden.

Eine Kalibration der Messstation 2 kann unter Zuhilfenahme von Messringen 12 am Trägerzylinder 1 erfolgen. Alternativ kann eine Messhülse oder der Trägerzylinder selbst zur Kalibration verwendet werden.

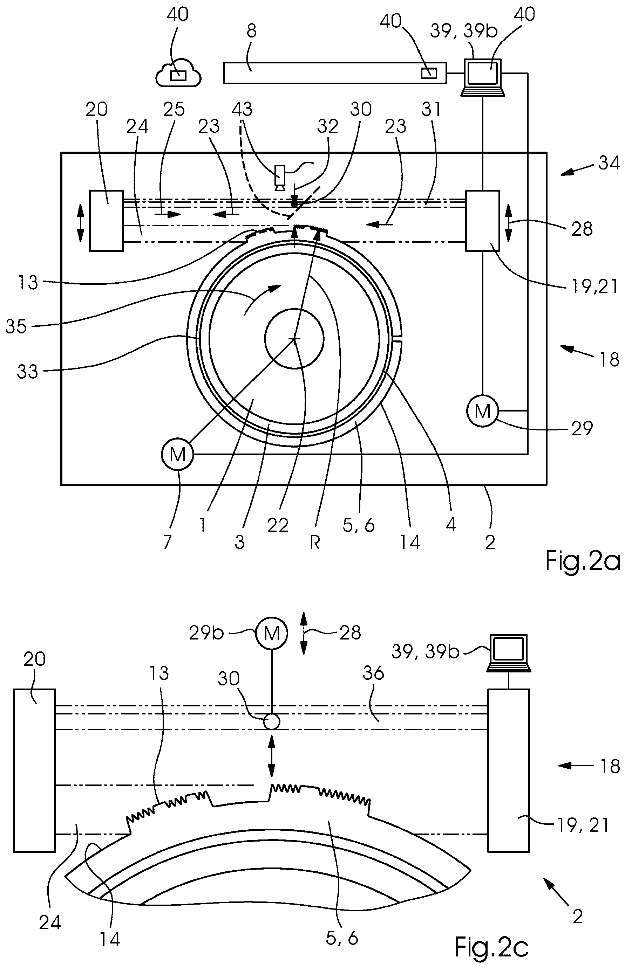

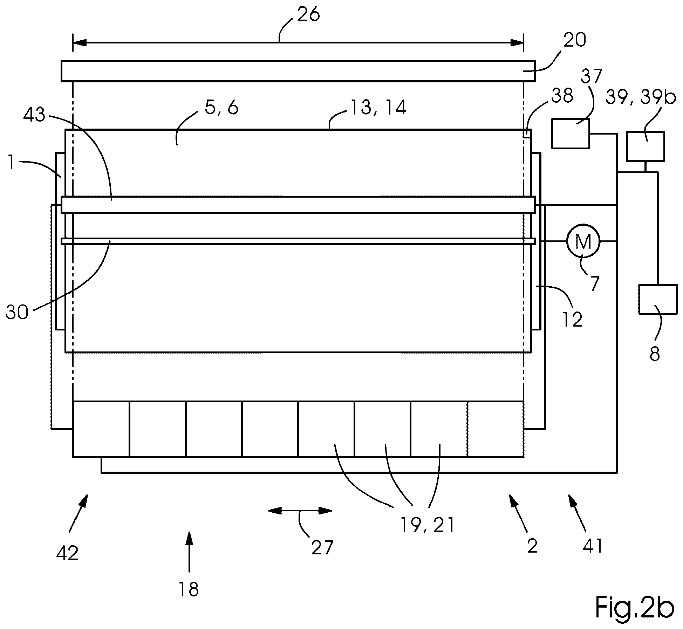

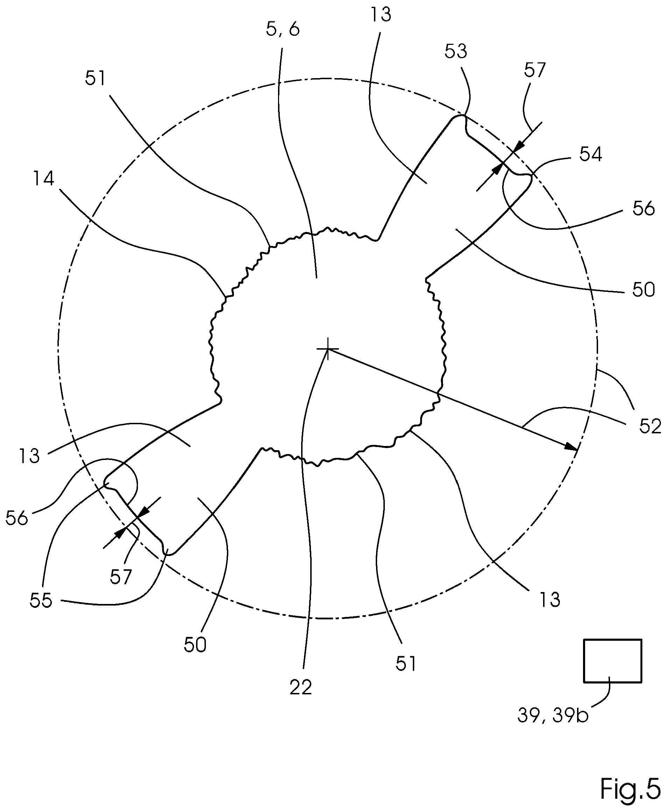

Die nachfolgenden Figuren 2a, 2b, 2c und 5 zeigen bevorzugte Ausführungsformen erfindungsgemäßer Vorrichtungen zum berührungslosen Vermessen von Erhebungen 13 der Oberfläche 14 eines als Zylinder, Walze, Hülse oder Platte der Druckmaschine 8 ausgebildeten Rotationskörpers 6 (vgl. Figur 2c). Die Erhebungen können z.B. Flexo-Druckpunkte (im Raster) oder Flexo-Druckflächen (in der Vollfläche) einer Flexo-Druckplatte sein. In den folgenden Ausführungsbeispielen wird beispielhaft das Vermessen einer Druckplatte 5 beschrieben. Durch das Vermessen der Druckplatte wird ein automatisches Voreinstellen des jeweiligen optimalen Arbeitsdrucks zwischen den am Druckprozess beteiligten Zylindern, z.B. Rasterzylinder 15, Druckzylinder 16 mit Druckplatte 5 und Gegendruckzylinder 17, ermöglicht.

Die Figuren 2a bis 2c zeigen eine bevorzugte Ausführungsform der erfindungsgemäßen Vorrichtung zum Vermessen der Topografie einer Druckplatte 5; Figur 2a im Querschnitt, Figur 2b in der Draufsicht und Figur 2c einen vergrößerten Ausschnitt aus Figur 2a. Gemäß dieser Ausführungsform wird die Topografie bevorzugt mit mehreren Einrichtungen18 im Rahmen einer 3D-Radius-Ermittlung mit einer Referenzlinie erfasst.

In dieser und den folgenden Ausführungsformen meint "2D", dass ein Abschnitt der Druckplatte 5 (z.B. ringförmiges Höhenprofil) gescannt wird und "3D", dass die gesamte Druckplatte 5 (z.B. zylinderförmiges Höhenprofil, aus ringförmigen Höhenprofilen zusammengesetzt) gescannt wird.

Die Vorrichtung umfasst mehrere Strahlungsquellen 19, insbesondere Lichtquellen19, bevorzugt LED-Lichtquellen, wenigstens einen Reflektor 20 und wenigstens einen Lichtempfänger 21, eine Flächenkamera und besonders bevorzugt eine Hochgeschwindigkeitskamera. Im Folgenden wird beispielhaft von Lichtquellen als den Strahlungsquellen ausgegangen, d.h. es wird sichtbares Licht ausgesendet. Alternativ kann die Strahlungsquelle andere elektromagnetische Strahlung aussenden, z.B. Infrarot. Die Lichtquellen sind bevorzugt in einer Reihe senkrecht zur Rotationsachse 22 des Trägerzylinders 1 angeordnet und erzeugen einen Lichtvorhang 23, wobei der Trägerzylinder 1 mit Hülse 3 und Druckplatte 5, d.h. die Kontur, eine Abschattung 24 erzeugen. Das reflektierte und dann empfangene Licht 25, also im Wesentlichen das ausgesendete Licht des Lichtvorhangs 23 ohne das von der Topografie 13 abgeschattete Licht 24, trägt Informationen über die zu vermessende Topografie 13. Der Reflektor 20 kann als eine reflektierende Folie ausgebildet sein.

Der Lichtempfänger 21 ist flächenförmig (Flächenkamera). Die Lichtquellen senden bevorzugt sichtbares Licht aus. Bevorzugt decken die Lichtquellen 19 und -empfänger 21 die Arbeitsbreite 26, d.h. die Ausdehnung der Druckplatte 5 in Richtung seiner Achse 22 (z.B. 1650 mm), ab. Es können bevorzugt n Lichtquellen 19 und -empfänger 21 vorgesehen sein, wobei z.B. 2<n>69. Bei Einsatz von Kameras geringerer Größe kann eine höhere Obergrenze als 69 erforderlich sein. Wird die gesamte Arbeitsbreite 26 abgedeckt, so kann die Druckplatte 5 während einer Umdrehung des Trägerzylinders 1 vermessen werden. Andernfalls müssen die Lichtquellen und Lichtempfänger in axialer Richtung 27 entlang der Druckplatte bewegt oder getaktet werden.

Bevorzugt kommen günstige aber schnell arbeitende Kameras 21 zum Einsatz, z.B. Schwarz-Weiß-Kameras. Die Kameras können während der Rotation der Druckplatte 5 einzelne Bilder aufnehmen oder einen Film.

Die Einrichtung aus Lichtquellen 19, Reflektor 20 und Lichtempfänger 21 kann bevorzugt in eine Richtung 28 senkrecht zur Achse 22 des Trägerzylinders 1 bewegt werden, um den erzeugten Lichtvorhang 23 auf die zu vermessende Topografie 13 zu richten. Hierzu kann ein Motor 29 vorhanden sein. Es kann auch vorgesehen sein, den Reflektor ortsfest auszubilden und nur die Lichtquelle und/oder den Lichtempfänger zu bewegen, z.B. motorisch zu verfahren.

Entgegen der Darstellung erfolgt das Vermessen der Topografie 13 bevorzugt in senkrechter (z.B. Kamera "unten" und Reflektor "oben") und nicht in waagrechter Richtung, da in diesem Fall eine mögliche Durchbiegung des Trägerzylinders 1 und des Referenzobjekts 30 unberücksichtigt bleiben kann. Man muss sich bei dieser bevorzugten Lösung die Figur 2a um 90° im Uhrzeigersinn gedreht vorstellen.

Als Referenzobjekt 30 ist ein linienartiges Objekt 30, bevorzugt ein gespannter Faden 30 oder eine gespannte Saite 30, z.B. ein Metalldraht oder eine Carbonfaser oder ein Messer (oder ein messerartiges Objekt oder ein Objekt mit einer Schneide) oder ein Balken, vorgesehen, welches eine Referenzlinie 31 für die Mehrzahl von Lichtempfängern 21 erzeugt. Das linienartige Objekt erstreckt sich parallel zur Achse des Trägerzylinders 1 und ist in geringem Abstand 32, z.B. 2 mm bis 10 mm (maximal bis 20 mm), zu dessen Mantelfläche 33 bzw. der darauf angeordneten Druckplatte 5 angeordnet. Das empfangene Licht 25 enthält auch auswertbare Informationen über das Referenzobjekt 30, z.B. dessen Ort und/oder Abstand zur (bevorzugt geätzten und daher tiefer als die Erhebungen 13 liegenden) Oberfläche 14 der Druckplatte 5. Mittels der Referenzlinie kann der radiale Abstand R der Topografie 13 bzw. der Kontur oder der Konturerhebungen zum Referenzobjekt 30, bevorzugt unter Einsatz von digitaler Bildverarbeitung, bestimmt werden. Der Abstand des Referenzobjekts 30 von der Achse 22 des Trägerzylinders 1 ist durch die Anordnung und/oder motorische Verstellung des Referenzobjekts 30 (optional gemeinsam mit Lichtquelle 19 und Lichtempfänger 21 und ggf. Reflektor 20) bekannt. Somit kann rechentechnisch der radiale Abstand der Konturerhebungen, d.h. der Radius R der Druckpunkte, bestimmt werden. Durch den Einsatz des Referenzobjekts 30 und somit dem Vorhandensein einer von ihm hervorgerufenen Abschattung bzw. einer zur Abschattung korrespondierenden Referenzlinie 31 (im aufgenommenen Bild bzw. aus dem empfangenen Licht) einer jeden Kamera 21 ist eine exakte, z.B. pixelgenaue Ausrichtung der Kameras zueinander nicht zwingend erforderlich. Ferner kann das Referenzobjekt 30 zur Kalibrierung des Messsystems genutzt werden.

Das Referenzobjekt 30 kann zur Bewegung bzw. Verstellung in Richtung 28 mit der Lichtquelle 19 und/oder dem Motor 29 gekoppelt sein. Alternativ kann das Referenzobjekt einen eigenen Motor 29b für das Bewegen/Verstellen aufweisen.

Zum initialen Referenzieren der Vorrichtung wird bevorzugt eine Messung mit dem ("leeren") Trägerzylinder oder einer darauf angeordneten Messhülse durchgeführt (Messung Abstand Referenzobjekt zu Oberfläche von AS 41 nach BS 42).

Zum weiteren Initialisieren der Vorrichtung vor dem Messvorgang wird bevorzugt zunächst die Flächenkamera 21 in Richtung 28 zum Trägerzylinder 1 hinbewegt. Die Bewegung wird bevorzugt gestoppt, sobald die Kamera bevorzugt die erste Erhebung detektiert. Danach wird das Referenzobjekt 30 bevorzugt ebenfalls in Richtung 28 bis auf einen vorgegebenen Abstand, z.B. 2 mm, zum Trägerzylinder 1 hinbewegt.

Lichtquelle 19 und Lichtempfänger 21 können alternativ auch auf gegenüberliegenden Seiten des Trägerzylinders 1 angeordnet sein; in diesem Fall kann auf den Reflektor 20 verzichtet werden.

Bevorzugt bilden die Lichtquelle 19, der Reflektor 20 (sofern gemäß Ausführungsform vorhanden), der Lichtempfänger 21 und das Referenzobjekt 30 eine (senkrecht zur Achse 22 des Trägerzylinders) bewegbare, insbesondere motorisch verstellbare oder verfahrbare Einheit 34.

Während des Messens rotiert der Trägerzylinder 1 mit der darauf befindlichen Druckplatte 5, so dass bevorzugt alle Erhebungen 13 in Umfangsrichtung 35 erfasst werden können. Daraus lässt sich in Abhängigkeit der Winkelposition des Trägerzylinders 1 ein Topografie-Bild und der Radius R einzelner Erhebungen 13, z.B. Flexodruckpunkte, zur Achse 22 oder der Durchmesser D (gemessen zwischen sich gegenüberliegenden Erhebungen) ermitteln.

In der vergrößerten Darstellung der Figur 2c ist ein Ausschnitt der Topografie 13 der Druckplatte 5 gezeigt und es ist die Abschattung 24 der Topografie und die Abschattung 36 des Referenzobjekts 30 erkennbar. Die Topografie-Erhebungen 13 können im Bereich von 2 µm bis 20 mm liegen.

Es kann weiterhin ein Sensor 37 vorgesehen sein, welcher die Hülse 3 und/oder die Druckplatte 5 anhand eines Identifikationsmerkmals 38 (vgl. Figur 2b) erfasst. Dieses Merkmal kann z.B. ein Barcode, ein 2D-Code (z.B. QR-Code oder Datamatrixcode), ein RFID-Chip oder ein NFC-Chip sein.

Die von den Lichtempfängern 21 erzeugten Signale und/oder Daten, welche Informationen über die Topografie 13 der vermessenen Oberfläche 14 und über das Referenzobjekt 30 umfassen, werden an einen Rechner 39 übertragen, bevorzugt über eine Leitung oder über Funkverbindung, und dort weiterverarbeitet. Der Rechner steht mit der Druckmaschine 8 in Verbindung. Der Rechner 39 wertet die Informationen aus.

Das Ergebnis der Auswertung wird in einem digitalen Speicher 40 des Rechners, in einem Speicher 40 der Druckmaschine oder in einen Cloud-basierten Speicher abgelegt. Die Ergebnisse werden bevorzugt dem jeweiligen Identifikationsmerkmal 38 zugeordnet abgespeichert. Bei der späteren Verwendung der auf einer Hülse montierten Druckplatte 5 (oder der Druckhülse/Flexodruckplatte) in der Druckmaschine 8 kann das Identifikationsmerkmal 38 der Druckplatte 5 (oder der Druckhülse/Flexodruckplatte) erneut eingelesen werden. Dann können die zum Identifikationsmerkmal 38 gespeicherten Werte, z.B. zum Zwecke der Voreinstellung, abgerufen werden. Es kann z.B. vorgesehen sein, dass die Druckmaschine benötigte Daten für einen Druckauftrag aus dem Cloud-basierten Speicher erhält.

Das Ergebnis der Auswertung kann bevorzugt bis zu vier Werte umfassen: Die betriebsmäßig erforderlichen Druckzustellungen des Druckzylinders 16, d.h. des die vermessene Druckplatte 5 tragenden Zylinders auf den beiden Seiten 41 bzw. AS (Antriebsseite) und 42 bzw. BS (Bedienseite) gegen den Gegendruckzylinder 17 oder Bedruckstoff-Transportzylinder 17 und die betriebsmäßig erforderlichen Druckzustellungen einer die vermessene Druckplatte 5 einfärbenden Rasterwalze 15 auf den beiden Seiten 41 bzw. AS (Antriebsseite) und 42 bzw. BS (Bedienseite) gegen den Druckzylinder 16.

Weiterhin kann eine Einrichtung 43 zum Erfassen der Punktdichte, z.B. über eine optische Abtastung, vorgesehen sein, bevorzugt eine Lasertriangulations-Einrichtung, eine CIS-Scannerleiste (Contact Image Sensor) oder eine Zeilenkamera. Alternativ kann die Einrichtung 43 ein schwenkbarer oder bewegbarer Spiegel sein, derart, dass dieser zusammen mit den Lichtquellen 19 zur Messung der Punktdichte genutzt werden kann. Die Einrichtung ist bevorzugt mit einer Einrichtung zur Bildverarbeitung und/oder Bildauswertung verbunden, welche bevorzugt der Rechner 39 - bzw. der Rechner 39 mit einer entsprechenden Programmierung - ist oder welche ein weiterer Rechner 39b sein kann.

Eine CIS-Scannerleiste kann achsparallel zum Zylinder angeordnet sein. Sie umfasst bevorzugt LEDs zur Beleuchtung und Sensoren zur Bildaufnahme (ähnlich einer Scannerleiste in einem handelsüblichen Kopierer). Die Leiste ist bevorzugt in einem Abstand von 1 bis 2 cm zur Oberfläche angeordnet oder wird auf diesen Abstand positioniert. Der Zylinder mit der zu vermessenden Oberfläche, z.B. der Druckplatte, rotiert unter der Leiste, die dabei ein Bild der Oberfläche erzeugt und einer Bildauswertung für eine Punktdichte-Auswertung zur Verfügung stellt. Die aus dem Erfassen der Punktdichte gewonnenen Daten können z.B. auch verwendet werden, um aus einer Menge von bereitstehenden Rasterwalzen eine - für das Drucken mit der erfassten Druckform optimale - Rasterwalze rechentechnisch auszuwählen bzw. zu empfehlen.

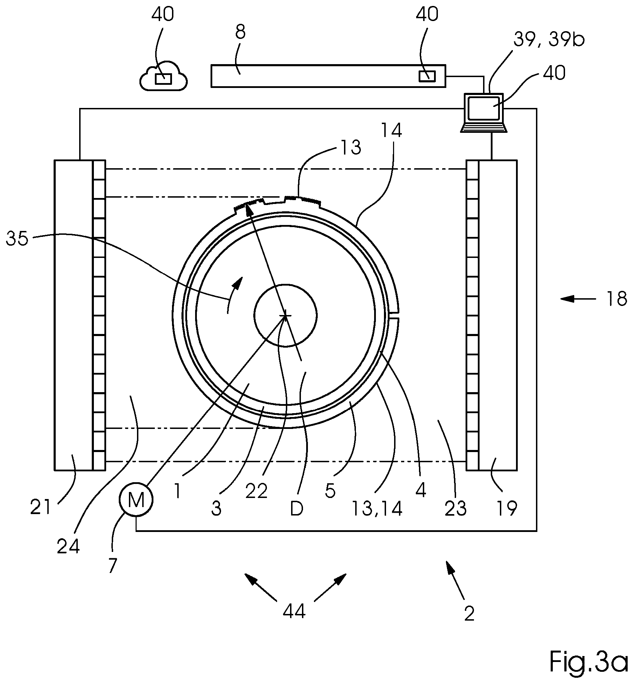

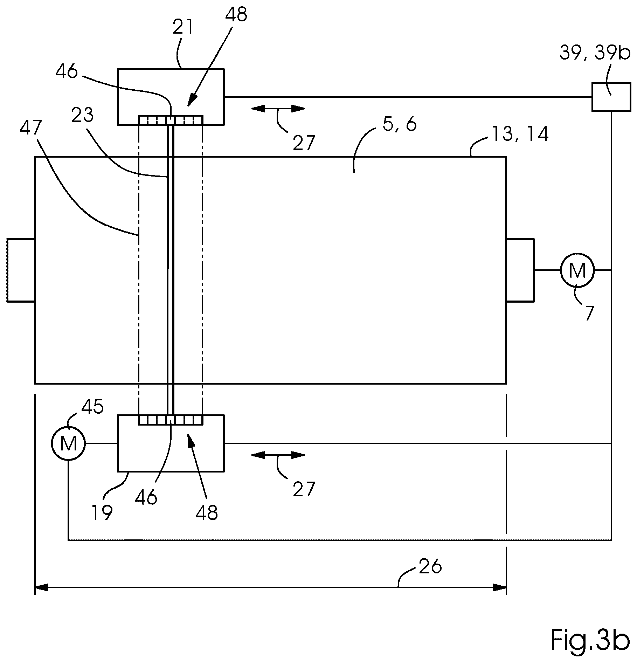

Die Figuren 3a und 3b zeigen eine Ausführungsform einer Vorrichtung zum Vermessen der Topografie einer Druckplatte 5 ohne Referenzobjekt; Figur 3a im Querschnitt und Figur 3b in der Draufsicht. Gemäß dieser Ausführungsform wird die Topografie bevorzugt mit einem Lasermikrometer 44 im Rahmen einer 2D-Durchmesser-Ermittlung erfasst.

Die Vorrichtung umfasst eine Lichtquelle 19, bevorzugt eine zeilenförmige LED-Lichtquelle 19 oder einen zeilenförmigen Laser 19, und einen Lichtempfänger 21, bevorzugt eine Zeilenkamera 21. Laser und Lichtempfänger bilden gemeinsam einen Lasermikrometer 44. Die Lichtquelle 19 erzeugt einen Lichtvorhang 23 und der Trägerzylinder 1 mit Hülse 3 und Druckplatte 5 erzeugt eine Abschattung 24. Die Zeilen-Längen der Lichtquelle 19 und der Lichtempfänger 21 sind bevorzugt größer als der Durchmesser D des Trägerzylinders samt Hülse und Druckplatte, um die Topografie ohne ein Bewegen der Einrichtung 44 senkrecht zur Achse 22 des Trägerzylinders zu ermöglichen. Mit anderen Worten: der Querschnitt des Trägerzylinders befindet sich vollständig im Lichtvorhang.

Die Einrichtung 44 aus Lichtquelle 19 und Lichtempfänger 21 kann parallel zur Achse 22 des Trägerzylinders bewegt werden (in Richtung 27), um die gesamte Arbeitsbreite 26 zu erfassen. Hierzu kann ein Motor 45 vorhanden sein.

Es kann ein Sensor 37 vorgesehen sein, welcher die Hülse 3 und/oder die Druckplatte 5 anhand eines Identifikationsmerkmals 38 erfasst (vgl. Figur 2b).

Die von den Lichtempfängern 21 erzeugten Signale und/oder Daten werden an einen Rechner 39 übertragen, bevorzugt über eine Leitung oder über Funkverbindung, und dort weiterverarbeitet. Der Rechner steht mit der Druckmaschine 8 in Verbindung.

Lichtquelle 19 und Lichtempfänger 21 können alternativ auch auf derselben Seite des Trägerzylinders 1 angeordnet sein; in diesem Fall wird gegenüber ein Reflektor 20 ähnlich wie in den Figuren 2a bis 2c angeordnet.

Gemäß einer alternativen Ausführungsform wird die Topografie bevorzugt mit einem Lasermikrometer 44 im Rahmen einer 2D-Durchmesser-Ermittlung erfasst, wobei nicht nur eine einzelne Messzeile 46, sondern ein breiterer (gestrichelt dargestellter) Messtreifen 47 aus mehreren (gestrichelt dargestellten) Messzeilen 48 erfasst werden. Lichtquelle 19 und Lichtempfänger 21 sind in diesem Ausführungsbeispiel bevorzugt flächig und nicht bloß zeilenförmig ausgebildet. Die Lichtquelle 19 kann mehrere Lichtzeilen 48 von jeweils etwa 0,1 mm Breite und etwa 5 mm jeweiligen Abstands zueinander umfassen. Die Kamera ist in diesem Beispiel bevorzugt als Flächenkamera ausgebildet.

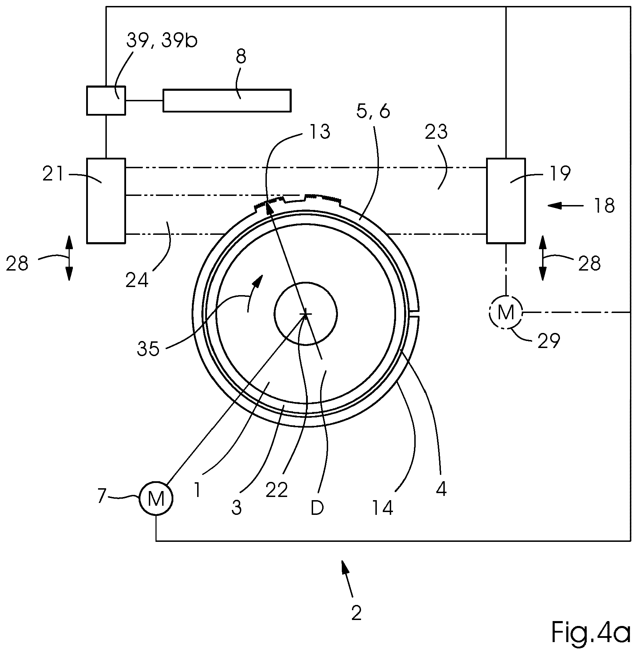

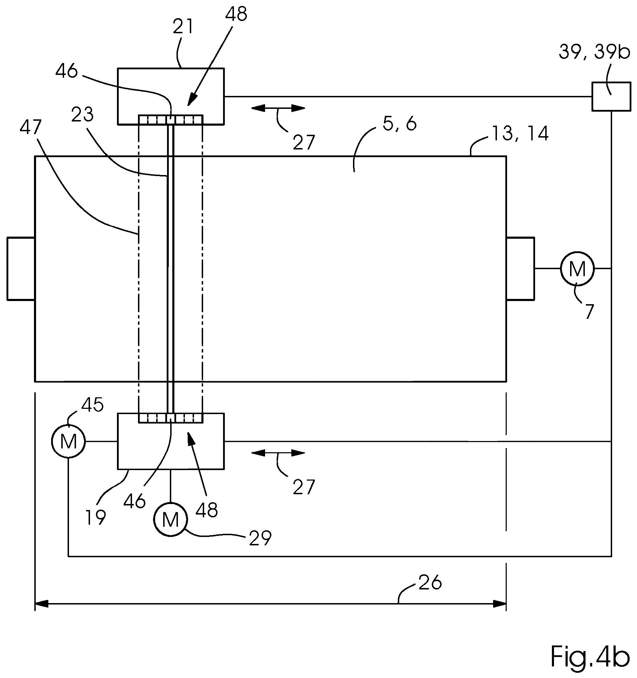

Die Figuren 4a und 4b zeigen eine Ausführungsform einer Vorrichtung zum Vermessen der Topografie einer Druckplatte 5 ohne Referenzobjekt; Figur 4a im Querschnitt und Figur 4b in der Draufsicht. Gemäß dieser Ausführungsform wird die Topografie bevorzugt mit einem Lasermikrometer im Rahmen einer 2D-Radius-Ermittlung erfasst.

Die Vorrichtung umfasst eine Lichtquelle 19, bevorzugt eine LED-Lichtquelle 19, und einen Lichtempfänger 21, bevorzugt eine zeilenförmige LED-Lichtquelle 19 oder einen zeilenförmigen Laser 19. Die Lichtquelle 19 erzeugt einen Lichtvorhang 23 und der Trägerzylinder 1 mit Hülse 3 und Druckplatte 5 erzeugt eine Abschattung 24.

Die Einrichtung aus Lichtquelle 19 und Lichtempfänger 21 kann bevorzugt in eine Richtung 28 senkrecht zur Achse 22 des Trägerzylinders 1 bewegt werden, um den Lichtvorhang 23 auf die zu vermessende Topografie 13 zu richten. Hierzu kann ein Motor 29 vorhanden sein. Für den Fall, dass der Lichtvorhang 23 breit genug ist und daher den Messbereich abdeckt, kann auf den Motor 29 verzichtet werden.

Die von den Lichtempfängern 21 erzeugten Signale und/oder Daten werden an einen Rechner 39 übertragen, bevorzugt über eine Leitung oder über Funkverbindung, und dort weiterverarbeitet. Der Rechner steht mit der Druckmaschine 8 in Verbindung. Lichtquelle 19 und Lichtempfänger 21 können alternativ auch auf derselben Seite des Trägerzylinders angeordnet sein; in diesem Fall wird gegenüber ein Reflektor 20 ähnlich wie in den Figuren 2A bis 2C angeordnet.

Gemäß einer alternativen Ausführungsform wird die Topografie 13 bevorzugt mit einem Lasermikrometer 44 im Rahmen einer 3D-Radius-Ermittlung erfasst, wobei nicht nur eine Messzeile 46, sondern ein breiterer (gestrichelt dargestellter) Messtreifen 47, d.h. gleichzeitig mehrere Messzeilen 48, erfasst werden. Lichtquelle 19 und Lichtempfänger 21 sind in diesem Ausführungsbeispiel flächig und nicht bloß zeilenförmig ausgebildet.

Gemäß einer weiteren alternativen Ausführungsform wird die Topografie 13 bevorzugt mit einem Lasermikrometer 44 im Rahmen einer 3D-Radius-Ermittlung erfasst, wobei die Einrichtung aus Lichtquelle 19 und Lichtempfänger 21 bevorzugt in eine Richtung 28 senkrecht zur Achse des Trägerzylinders 1 bewegt werden kann, um den Lichtvorhang 23 auf die zu vermessende Topografie 13 zu richten. Hierzu kann ein (gestrichelt dargestellter) Motor 29 vorhanden sein.

Gemäß einer alternativen Ausführungsform wird die Topografie 13 bevorzugt mit einem Lasermikrometer 44 im Rahmen einer 3D-Radius-Ermittlung erfasst, wobei die beiden letztgenannten alternativen Ausführungsformen kombiniert werden.

Figur 5 zeigt ein beispielhaftes und stark vergrößert dargestelltes Topografie-Messergebnis einer Druckplatte 5 mit zwei druckenden Bereichen 50 und zwei nicht-druckenden Bereichen 51. Es sind die radialen Messergebnisse für 360° an einem axialen Ort (bezüglich der Achse des Trägerzylinders) gezeigt. Die nicht-drückenden Bereiche können z.B. durch Ätzen erzeugt worden sein und somit einen geringeren Radius als die druckenden Bereiche aufweisen.

In der Darstellung ist auch ein einhüllender Radius 52 bzw. eine Einhüllende 52 derjenigen Punkte der Druckplatte 5 mit dem größten Radius, d.h. den höchsten Erhebungen der Topografie 13 am axialen Ort, gezeigt.

Der Punkt 53 der Druckplatte 5 ist ein druckender Punkt, da dieser im Druckbetrieb bei normal eingestellter Pressung bzw. Druckzustellung zwischen Druckplatte 5 und Bedruckstoff 11 bzw. Transportzylinder 17 ausreichend Kontakt zum Bedruckstoff und zur farbübertragenden Rasterwalze hätte. Normal eingestellte Pressung erzeugt einen so genannten Kiss-Print, bei dem die Druckplatte den Bedruckstoff gerade berührt und bei dem die Flexodruckpunkte nicht wesentlich gequetscht werden.

Der Punkt 54 ist ein Punkt, welcher im Druckbetrieb bei normal eingestellter Pressung gerade noch drucken würde, da er gerade noch Kontakt zum Bedruckstoff hätte.

Die beiden Punkte 55 sind Punkte, die nicht drucken würden, da sie im Druckbetrieb bei normal eingestellter Pressung keinen Kontakt zum Bedruckstoff und auch nicht zur Rasterwalze hätten.

Auf dem Rechner 39 läuft ein Computerprogramm, welches im druckenden Bereich 50 rechentechnisch, z.B. unter Einsatz digitaler Bildverarbeitung, den radial tiefsten Punkt 56 und dessen radialen Abstand 57 zur Einhüllenden 52 ermittelt. Diese Berechnung wird in axialer Richtung in regelmäßigen Abständen durchgeführt, z.B. von AS 41 nach BS 42 an allen Messpunkten, und das jeweilige Maximum der tiefsten Punkte (d.h. der maximal tiefste Wert) von AS 41 bis Mitte und von Mitte bis BS 42 bestimmt. Die beiden Maxima oder daraus rechentechnisch bestimmte Zustellwerte oder Einstellwerte können z.B. als jeweilige Zustellung/Einstellung auf AS 41 und BS 42 beim Drucken gewählt werden, d.h. der Zylinderabstand zwischen den am Drucken beteiligten Zylindern wird um die Zustellung auf AS 41 und BS 42 verringert. Hierzu können aus AS 41 und auf BS 42 jeweils eine motorische Gewindespindel eingesetzt werden.

Nachfolgend ein konkretes Zahlenbeispiel: Auf der einen Seite ergibt sich als Abstand deltaR=65µm und auf der anderen als Abstand deltaR=55µm. Damit alle Punkte 53 bis 55 der Druckplatte drucken, müssen 65µm zugestellt werden.

In allen dargestellten Ausführungsformen und deren genannten Alternativen kann zusätzlich die herstellungsbedingte und/oder betriebsbedingte (durch Abnutzung bedingte) Rundlaufgenauigkeit der Hülse 3 vermessen werden und kann auf Basis der Mess- und Auswerteergebnisse beim Drucken zur Verbesserung der Qualität der erzeugten Druckprodukte berücksichtigt werden. Bei Überschreiten einer vorgegebenen Rundlauf-Toleranz kann eine Warnung ausgegeben werden. Das Messen kann bei glatten und bei porösen Hülsen durchgeführt werden.

In allen dargestellten Ausführungsformen und deren genannten Alternativen können zusätzlich herstellungsbedingte Dickeschwankungen der Druckplatte 5, insbesondere von deren Polymermaterial, und/oder deren Verzerrungen, insbesondere durch die Montage auf der Hülse, und/oder Staub- und/oder Haar- oder Lufteinschlüsse (zwischen Hülse und montierter Druckplatte) und/oder die vorhandenen Erhebungen durch Klebeflächen 4 und/oder der Temperatureinfluss (Wärmeausdehnung) vermessen werden. Staubkörner und deren Position können durch die Topografieerfassung individuell bestimmt werden. Einzelne Staubkörner können dem Bediener, z.B. durch einen projizierten Laserspot/ ein projiziertes Laserkreuz auf der Druckplatte 5, zum Entfernen angezeigt werden. Alternativ kann eine Staubentfernungs-Einrichtung an die Position des Staubkorns gefahren werden und das Staubkorn z.B. durch einen Luftstoß oder mittels einer Walze entfernt werden.

In allen dargestellten Ausführungsformen und deren genannten Alternativen können auch Parameter für eine dynamische Druckzustellung ermittelt und an die Druckmaschine übergeben werden. Dabei kann z.B. eine bekannte - (z.B. vorab gemessene) und dem Rechner 39 zur Verfügung stehende - verzögerte Ausdehnung der verformbaren und/oder komprimierbaren Druckpunkte 53 bis 55 aus Polymermaterial berücksichtigt werden. Oder es kann eine vorab mit einem Durometer ermittelte Härte der Druckplatte verwendet werden. Diese Ausdehnung kann insbesondere von der betriebsmäßig herrschenden Druckgeschwindigkeit abhängen bzw. diese Druckgeschwindigkeitsabhängigkeit kann berücksichtigt werden. Es kann z.B. bei höheren Druckgeschwindigkeiten eine höhere Druckbeistellung gewählt werden.

Dabei kann auch die Druckfläche der Druckplatte 5 oder die Punktdichte, d.h. die ortsveränderlichen Dichte der Druckpunkte auf der Druckplatte 5, (alternativ oder zusätzlich zur Druckgeschwindigkeit) berücksichtigt werden: Es kann z.B. bei höheren Punktdichten eine höhere Druckbeistellung gewählt werden und/oder die Punktdichte kann bei der Einstellung der dynamischen Druckbeistellung verwendet werden. Hierzu kann eine Einrichtung 43 zum Erfassen bzw. Messen der Punktdichte, d.h. deren lokale Werte, auf der Druckform, z.B. Flexodruckplatte, vorgesehen sein, bevorzugt eine CIS-Scannerleiste oder eine Zeilenkamera. Es kann z.B. vorgesehen sein, auf Basis der gewonnenen/berechneten Daten aus der Punktdichtermittlung Vorgabewerte für eine unterschiedliche Druckbeistellung auf AS 41 (Antriebseite der Druckmaschine) und BS 42 (Bedienseite der Druckmaschine) bereitzustellen.

In Kenntnis der Punktdichte der Druckplatte 5 und/oder der einfärbenden Rasterwalze 15 und/oder Rasterhülse15 kann der zu erwartende Farbverbrauch beim Drucken mit der Druckplatte auf einen gegebenen Bedruckstoff 11 rechentechnisch ermittelt werden. Aus dem Farbverbrauch kann die benötigte Trocknerleistung der Trockner 10 zum Trocknen der Farbe auf dem Bedruckstoff rechentechnisch ermitteltwerden. Ausgehend von dem berechneten, zu erwartenden Farbverbrauch kann auch ein bereitzustellender Farbvorrat berechnet werden.

In allen dargestellten Ausführungsformen und deren genannten Alternativen kann auch ein so genanntes Kanalschlagmuster berücksichtigt werden. Ein Kanalschlagmuster ist eine beim betriebsmäßigen Rotieren der Druckplatte 5 periodisch auftretende Störung, welche durch eine - meist in axialer Richtung sich erstreckende - seitenbreite oder wenigstens störend breite Lücke bzw. Kanal im Druckbild, d.h. einen störend großen Bereich ohne Druckpunkte, oder einen sonstigen axialen Kanal hervorgerufen wird. Durch solche Kanäle oder deren Kanalschlagmuster kann die Druckqualität beeinträchtigt werden, da sich die am Drucken beteiligten Zylinder durch die Kissprint-Anstellung im beim Rotieren wiederkehrenden Bereich des Kanals und somit rhythmisch annähern und abstoßen. Dies kann im ungünstigen Fall zu ungewollten Dichteschwankungen oder sogar Druckaussetzern führen. Ein vorhandenes Kanalschlagmuster kann bevorzugt mittels CIS-Messeinrichtung 43 (z.B. der oben erwähnte schwenkbare oder bewegbare Spiegel zusammen mit den Flächenkameras) oder mittels einer Flächenkamera erfasst und rechentechnisch ausgewertet und bei der betriebsmäßig erforderlichen Druckzustellung kompensiert werden. Zum Beispiel kann auf Basis des erfassten Kanalschlagmusters vorausberechnet werden, bei welchen Geschwindigkeiten bzw. Rotationsfrequenzen einer Druckmaschine Schwingungen auftreten würden. Diese Geschwindigkeiten bzw. Rotationsfrequenzen werden dann während der Produktion nicht verwendet und z.B. beim Hochfahren der Maschine überfahren.

Jede Druckplatte 5 kann ein individuelles Kanalschlagmuster aufweisen. Kanäle in der Druckform können das Druckergebnis negativ beeinflussen oder gar zu Druckaussetzern führen. Um Kanalschläge zu mildern oder gar zu eliminieren, wird die Druckplatte auf Kanäle in Abrollrichtung untersucht. Bei bekannten Resonanzfrequenzen des Druckwerks 9 können Produktions-Geschwindigkeiten berechnet werden, die besonders ungünstig bei gegebener Druckform sind. Diese Druckgeschwindigkeiten gilt es zu vermeiden (so genannte "no go speed").

In allen dargestellten Ausführungsformen und deren genannten Alternativen können auch Registermarken (oder mehrere Registermarken, z.B. Keile, Doppelkeile, Punkte oder Fadenkreuze) auf der Druckform erfasst werden, z.B. unter Einsatz der Kamera 21 oder 43 und einer nachgeschalteten digitalen Bildverarbeitung, und deren Position gemessen, gespeichert und bereitgehaltenen werden. Hierdurch wird eine automatische Einstellung von Registerreglern oder deren Registersensoren auf die Registermarken oder auf axiale Positionen ermöglicht. Fehler durch das sonst übliche händische Einstellen der Sensoren können so vorteilhaft verhindert werden. Alternativ können Muster erfasst werden und zur Konfiguration eines Registerreglers verwendet werden. Es kann auch vorgesehen sein, einen motorisch bewegbaren Registersensor automatisch zu positionieren, insbesondere in axialer Richtung. Es kann auch vorgesehen sein, einen vorgegebenen Nullpunkt der Winkelstellung eines Druckzylinder und/oder einer darauf angeordneten Druckhülse mit einem Winkelwert des tatsächlichen Orts eines (z.B. von Hand aufgeklebten) Druckbilds abzugleichen, insbesondere in Umfangsrichtung (bzw. des Zylinders/der Hülse). Aus diesem Abgleich kann ein optimaler Startwert für die Winkelstellung des Zylinders/der Hülse gewonnen werden. Auf diese Weise kann die Druckproduktion mit reduzierter Registerabweichung gestartet werden. Entsprechendes gilt für die Lateralrichtung (bzw. des Zylinders/der Hülse).

In allen dargestellten Ausführungsformen und deren genannten Alternativen kann auch die Leistung des Trockners 10 der Druckmaschine 8 gesteuert oder geregelt werden. Beispielsweise können LED-Trocknersegmente in Bereichen abgeschaltet werden, in denen keine Druckfarbe auf dem Bedruckstoff übertragen wurde, wodurch eine vorteilhafte Energieeinsparung und Lebensdauerverlängerung der LEDs möglich wird.

Weiter vorteilhaft kann die Leistung des Trockners 10 bzw. die Leistung einzelner Segmente des Trockners für Druckbereiche auf der Druckplatte mit geringer Punktdichte verringert werden. Hierdurch kann Energie eingespart und/oder die Lebensdauer des Trockners oder einzelner Segmente verlängert werden. Das Abschalten oder Verringern kann zum einen bereichsweise und zum anderen in einer Richtung parallel und/oder quer zur axialen Richtung einer Druckplatte bzw. zur lateralen Richtung des damit zu verarbeitenden Bedruckstoffs erfolgen. Zum Beispiel können Segmente oder Module eines Trockners in Bereichen abgeschaltet werden, die Lücken zwischen (z.B. mit Abstand zueinander angeordneten, insbesondere von Hand aufgeklebten) Druckplatten entsprechen.

In allen dargestellten Ausführungsformen und deren genannten Alternativen kann auch der jeweilige Ort (auf der Druckplatte 5) von Messfeldern für Druckinspektionssysteme erfasst und für die weitere Nutzung, z.B. die Ortseinstellung der Druckinspektionssysteme, bereitgestellt werden.

In allen dargestellten Ausführungsformen und deren genannten Alternativen kann auch ein inline-Farbmesssysteme positioniert werden. Um den Ort und damit die Position der Inlinefarbmessung zu bestimmen, wird eine Bild- und/oder Mustererkennung durchgeführt, anhand derer die axiale Position für das Messsystem bestimmt wird. Um eine freie Stelle für die Kalibrierung auf den Bedruckstoff zu ermöglichen, können dem Inline-Farbmesssystem freie Druckstellen mitgeteilt werden.

Im Folgenden soll ein beispielhafter Gesamt-Prozess dargestellt werden, der mit der erfindungsgemäßen Vorrichtung in einer passenden Ausführungsform durchgeführt werden kann.

### Messprozess:

Schritt 1: Hülse 3 mit oder ohne Druckplatte 5 wird auf den mit Luft beaufschlagten Trägerzylinder 1 der Messstation 2 über das Luftkissen aufgeschoben und arretiert.

Schritt 2: Die Hülse wird mit einer unikaten Zeichenkette 38 identifiziert. Das kann per Barcode, 2D-Code (z.B. QR-Code oder Datamatrixcode), RFID- Code oder NFC erfolgen.

Schritt 3: Kamera 21 und optional das Referenzobjekt 30 werden gemäß Durchmesser (der Hülse mit oder ohne Druckplatte) positioniert.

Schritt 4: Ermittlung der Topografie 13 der Druckplatte mit Bezugspunkt zur Achse 6 bzw. zum Achsmittelpunkt des Trägerzylinders 22, d.h. der Radien der Erhebungen/Druckpunkte 53 bis 55. Die Lichtquelle 19 und die Kamera 21 der Messeinrichtung 18 bewegen sich dabei ggf. axial und der Trägerzylinder rotiert (seine Winkelstellung ist über einen Encoder bekannt).

Schritt 5: Durchführung eines Flächenscans, um Punktdichten, freie Druckstellen, druckende Flächen, Registermarken und/oder Messfelder für Inline-Farbmessung zu erkennen.

Schritt 6: Anwendung eines auf einem Rechner 39 laufenden Topografie-Algorithmus und Auswertung der Flächen über den Flächen-Scan mit Erkennung von Kanalschlagmustern und mit Registermarkenfeld-Aufbau bzw. Inline-Farbmessung.

Schritt 7: Optionale Ermittlung der Plattenhärte (in der Einheit Shore).

Schritt 8: Anwendung eines Staub-Detektors und/oder eines Härchen-Detektors.

Schritt 9: Speichern der Daten der Messergebnisse in einem digitalen Speicher 40.

Schritt 10: Darstellung der Messergebnisse mit Hinweis auf Staub/Härchen bzw. eingeschlossenen Luftbläschen und/oder Anzeigen von Grenzwerten wie z.B. Rundlauf, Exzentrizität und/oder Balligkeit.

Schritt 11: Mögliche Messwiederholung oder Entfernen der Druckhülse, um eine weitere Hülse zu vermessen.

### Rüstprozess:

Schritt 1: Hülse 3 mit Druckplatte 5 wird auf den mit Luft beaufschlagten Druckzylinder 16 der Druckmaschine 8 über das Luftkissen aufgeschoben und arretiert.

Schritt 2: Die Hülse wird mit ihrer unikaten Zeichenkette 38 vom jeweiligen Druckwerk 9 bzw. eines dortigen Sensors identifiziert. Das kann per Barcode, 2D-Code (z.B. QR-Code oder Datamatrixcode), RFID-Code oder NFC erfolgen.

Schritt 3: Druckwerk bzw. Druckmaschine holt sich die gespeicherten Daten zu der zugehörigen identifizierten Druckhülse/Druckplatte.

### Einstell-Prozess:

Schritt 1: Zustellung des so genannten "Kissprints" (Einstellung der Pressung bzw. des Arbeitsdrucks) für Druckzylinder 16 und Rasterzylinder 15 z.B. anhand Topografie, Rundlauf und Bedruckstoffdaten für einen optimalen Druckpunkt. Durchmesser bzw. Radius werden ermittelt. Durchmesser bzw. Radius sind aus Messung bekannt.

Schritt 2: Berechnung des Vorregisters anhand von Registermarken-Daten auf der Druckplatte bzw. Hülsen-Bezugspunkt.

Schritt 3: Einstellung der dynamischen Druckzustellung anhand von ermittelten Punktdichte-Werten und bedruckter Fläche und Geschwindigkeit und optional des Bedruckstoffs. Optionale Berücksichtigung der Plattenhärte (in der Einheit Shore).

Schritt 3: Einstellung der optimalen Materialbahn-Geschwindigkeit z.B. anhand der Berechnung von ermittelten Resonanzfrequenzen des Druckwerks zu Druckplatte durch die Kanalschlagmuster-Erkennung.

Schritt 5: Einstellung der optimalen Trocknungsleistung (UV oder Heißluft) anhand von Punktdichte-Werte und bedruckter Fläche, sowie Rasterzylinder-Daten (Schöpfvolumen etc.) optional dynamisch an die Warenbahngeschwindigkeit angepasst.

Schritt 6: Berechnung des Farbverbrauchs anhand von Punktdichte-Werte und bedruckter Fläche, sowie Rasterzylinder-Daten (Schöpfvolumen etc.).

Schritt 7: Reduzieren oder Ausschalten von LED-UV-Trockner-Sektionen an Stellen, an denen sich eine geringe Punktdichte auf der Druckplatte befindet bzw. an denen keine Trocknung benötigt wird, um auf diese Weise Energie zu sparen und die Lebensdauer der LED-Lampen zu erhöhen.

Schritt 8: Vollautomatische Einstellung des Registerreglers anhand der gewonnen Registermarkendaten, z.B. Markenkonfiguration und automatische, axiale Positionierung des Registersensors.

Schritt 9: Einstellen der Mess-Position für die spektrale Inline-Messung und Druckinspektion der gedruckten Farben, Informationen über Ort bzw. Messposition.

### Bezugszeichenliste

- 1: Trägerzylinder
- 2: Messstation
- 3: Hülse
- 4: Klebeband
- 5: Druckplatte
- 6: Rotationskörper, insbesondere Druckplatte
- 7: erster Motor
- 8: Druckmaschine, insbesondere Flexodruckmaschine
- 9: Druckwerk
- 10: Trockner
- 11: Bedruckstoff
- 12: Messringe
- 13: Erhebungen/Topografie
- 14: Oberfläche
- 15: Rasterwalze/Rasterzylinder
- 16: Druckzylinder
- 17: Gegendruckzylinder/Bedruckstoff-Transportzylinder
- 18: Mess-Einrichtung
- 19: Strahlungsquellen, insbesondere Lichtquellen
- 20: Reflektor
- 21: Strahlungsempfänger, insbesondere Lichtempfänger, z.B. Kameras
- 22: Rotationsachse
- 23: Lichtvorhang/ausgesendetes Licht
- 24: Abschattung
- 25: reflektiertes Licht
- 26: Arbeitsbreite
- 27: axiale Richtung
- 28: Bewegungsrichtung
- 29: zweiter Motor
- 30: Referenzobjekt/linienartiges Objekt, insbesondere Faden/Saite/Messer/Balken
- 31: Referenzlinie
- 32: Abstand
- 33: Mantelfläche
- 34: Einheit
- 35: Umfangsrichtung
- 36: Abschattung
- 37: Sensor
- 38: Identifikationsmerkmal
- 39: digitaler Rechner
- 40: digitaler Speicher
- 41: Antriebsseite (AS)
- 42: Bedienseite (BS)
- 43: Einrichtung zum Erfassen der Punktdichte
- 44: Laser-Mikrometer
- 45: dritter Motor
- 46: Messzeile
- 47: Messstreifen
- 48: mehrere Messzeilen
- 50: druckender Bereich
- 51: nicht-druckender Bereich
- 52: einhüllender Radius/Einhüllende
- 53: druckender Punkt der Druckplatte
- 54: gerade noch druckender Punkt der Druckplatte
- 55: nicht-druckender Punkt der Druckplatte
- 56: tiefster Punkt
- 57: radialer Abstand
- 29b: weiterer zweiter Motor
- 39b: weiterer digitaler Rechner
- R: radialer Abstand
- D: Durchmesser

## Patentansprüche

1. Vorrichtung zum Vermessen von Erhebungen (13) der Oberfläche (14) eines als Zylinder (15), Walze (15), Hülse (3) oder Platte (5) für eine Druckmaschine (8) ausgebildeten Rotationskörpers (6), mit einem ersten Motor (7) zum Rotieren des Rotationskörpers (6) um eine Rotationsachse (22) und mit einer Messeinrichtung (18), wobei die Messeinrichtung (18) zum berührungslosen Vermessen wenigstens eine Strahlungsquelle (19) zum Aussenden von Licht (23) umfasst und wobei durch die Kontur des Rotationskörpers (6) eine Abschattung (24) im ausgesendeten Licht (24) erzeugt wird,
-**dadurch gekennzeichnet,**
- **dass** die Messeinrichtung (18) zum berührungslosen Vermessen wenigstens eine Flächenkamera (21) umfasst, dass die Strahlungsquelle (19) einen Lichtvorhang (23) als ausgesendetes Licht (23) erzeugt, und dass die Flächenkamera (21) das ausgesendete Licht (23) ohne die Abschattung (24) durch die Kontur empfängt,
- **dass** die Messeinrichtung (18) zum berührungslosen Vermessen ein Referenzobjekt (30) umfasst, dass durch das Referenzobjekt (30) eine Abschattung (36) erzeugt wird und dass die Flächenkamera (21) das ausgesendete Licht (23) ohne die Abschattung (36) durch das Referenzobjekt (30) empfängt, und
- **dass** das Referenzobjekt (30) ein linienartiges Objekt ist, welches parallel zur Rotationsachse (22) gespannt ist, oder ein Objekt mit einer Schneide oder ein Balken ist.

2. Vorrichtung nach einem der Ansprüche 1, **dadurch gekennzeichnet, dass** ein zweiter Motor (29) vorhanden ist, welcher das Verstellen der Messeinrichtung (18) senkrecht zur Rotationsachse (22) ermöglicht.

3. Vorrichtung nach einem der Ansprüche 1 oder 2, **dadurch gekennzeichnet, dass** der zweite Motor (29) das Referenzobjekt (30) senkrecht zur Rotationsachse (22) verstellt.

4. Vorrichtung nach einem der Ansprüche 1 oder 2, **dadurch gekennzeichnet, dass** ein weiterer zweiter Motor (29b) das Referenzobjekt (30) senkrecht zur Rotationsachse (22) verstellt.

5. Vorrichtung nach einem der vorhergehenden Ansprüche, **dadurch gekennzeichnet, dass** die Strahlungsquelle (19) wenigstens einen Bereich der Oberfläche (13, 14) bestrahlt.

6. Vorrichtung nach Anspruch 5, **dadurch gekennzeichnet, dass** die Strahlungsquelle (19) eine Lichtquelle (19) ist.

7. Vorrichtung nach einem der vorhergehenden Ansprüche, **dadurch gekennzeichnet, dass** das Referenzobjekt (30) parallel zur Rotationsachse (22) unbewegt ist.

8. Vorrichtung nach einem der vorhergehenden Ansprüche, **dadurch gekennzeichnet, dass** Referenzobjekt (30) eine gespannte Saite oder ein gespannter Draht oder eine gespannte Carbonfaser ist.

9. Vorrichtung nach einem der vorhergehenden Ansprüche, **dadurch gekennzeichnet, dass** ein dritter Motor (45) vorhanden ist, welcher die Strahlungsquelle (19) und die Kamera parallel zur Rotationsachse bewegt.

10. Vorrichtung nach einem der vorhergehenden Ansprüche, **dadurch gekennzeichnet, dass** die Messeinrichtung (18) wenigstens einen Reflektor (20) umfasst.

11. Vorrichtung nach einem der vorhergehenden Ansprüche, **dadurch gekennzeichnet, dass** die Kamera (21) wenigstens ein gemeinsames Bild, eine gemeinsame Bilderfolge oder einen gemeinsamen Film eines axialen Bereichs der Kontur des Rotationskörpers (6) und desselben axialen Bereichs des Referenzobjekts oder dessen Kontur aufnimmt.

12. Vorrichtung nach Anspruch 11, **dadurch gekennzeichnet, dass** ein Rechner (39) vorhanden ist, welcher das Bild, eine Bilderfolge oder den Film auswertet und dabei den radialen Abstand (57) einzelner Erhebungen (13, 53 bis 55) der Oberfläche (14) von der Rotationsachse (22) bestimmt.

13. Vorrichtung nach Anspruch 12, **dadurch gekennzeichnet, dass** die radialen Abstände (57) oder daraus abgeleitete Werte in einem digitalen Speicher als Daten gespeichert werden.

14. System aus einer Vorrichtung nach Anspruch 13 und einer Flexodruckmaschine mit wenigstens einem Druckwerk, welches einen Gegendruckzylinder, wenigstens einen Flexodruckzylinder und wenigstens eine Rasterwalze umfasst, und welches wenigstens einen Antrieb zum Einstellen des Anpressdrucks zwischen dem Gegendruckzylinder und dem Flexodruckzylinder und/oder zwischen den Flexodruckzylinder und der Rasterwalze umfasst, **dadurch gekennzeichnet, dass** die Daten einem Rechner der Flexodruckmaschine übermittelt und beim Einstellen des Anpressdrucks verwendet werden.

## Claims

1. Device for measuring projections (13) of the surface (14) of a rotary body (6) designed as a cylinder (15), roller (15), sleeve (3) or plate (5) for a printing press (8), having a first motor (7) for rotating the rotary body (6) about an axis of rotation (22) and having a measuring device (18), wherein the measuring device (18) for non-contact measurement comprises at least one radiation source (19) for emitting light (23) and wherein a shadow (24) is produced in the emitted light (24) by the contour of the rotary body (6),
**characterized in that**
- the measuring device (18) for non-contact measurement comprises at least one area scan camera (21), **in that** the radiation source (19) generates a light curtain (23) as emitted light (23), and **in that** the area scan camera (21) receives the emitted light (23) without the shadowing (24) by the contour,
- the measuring device (18) for non-contact measurement comprises a reference object (30), **in that** a shadow (36) is produced by the reference object (30), and **in that** the area scan camera (21) receives the emitted light (23) without the shadow (36) from the reference object (30), and
- the reference object (30) is a line-like object which is stretched parallel to the axis of rotation (22), or is an object with a cutting edge or a beam.

2. Device according to one of the claims 1, **characterized in that** a second motor (29) is provided, which enables the measuring device (18) to be adjusted perpendicular to the axis of rotation (22).

3. Device according to one of claims 1 or 2, **characterized in that** the second motor (29) moves the reference object (30) perpendicular to the axis of rotation (22).

4. Device according to one of the claims 1 or 2, **characterized in that** a further second motor (29b) moves the reference object (30) perpendicular to the axis of rotation (22).

5. Device according to any one of the preceding claims, **characterized in that** the radiation source (19) shines on at least one section of the surface (13, 14).

6. Device according to claim 5, **characterized in that** the radiation source (19) is a light source (19).

7. Device according to any one of the preceding claims, **characterized in that** the reference object (30) is motionless parallel to the axis of rotation (22).

8. Device according to one of the preceding claims, **characterized in that** the reference object (30) is a tensioned string or a tensioned wire or a tensioned carbon fiber.

9. Device according to one of the preceding claims, **characterized in that** a third motor (45) is provided, which moves the radiation source (19) and the camera parallel to the axis of rotation.

10. Device according to any one of the preceding claims, **characterized in that** the measuring device (18) comprises at least one reflector (20).

11. Device according to one of the preceding claims, **characterized in that** the camera (21) records at least one common image, a common image sequence or a common film of an axial section of the contour of the rotational body (6) and of the same axial section of the reference object or its contour.

12. Device according to claim 11, **characterized in that** a computer (39) is present, which evaluates the image, an image sequence or the film and thereby determines the radial distance (57) of individual projections (13, 53 to 55) of the surface (14) from the axis of rotation (22).

13. Device according to claim 12, **characterized in that** the radial distances (57) or values derived therefrom are stored as data in a digital memory.

14. System comprising a device according to claim 13 and a flexographic printing press with at least one printing unit, which comprises an impression cylinder, at least one flexographic printing cylinder and at least one screen roller, and which comprises at least one drive for adjusting the contact pressure between the impression cylinder and the flexographic printing cylinder and/or between the flexographic printing cylinder and the screen roller, **characterized in that** the data are transmitted to a computer of the flexographic printing press and are used when adjusting the contact pressure.

## Revendications

1. Dispositif pour mesurer des bosses (13) à la surface (14) d'un corps rotatif (6) réalisé sous la forme d'un cylindre (15), d'un rouleau (15), d'une douille (3) ou d'une plaque (5) pour une machine à imprimer (8), comprenant un premier moteur (7) destiné à faire tourner le corps rotatif (6) autour d'un axe de rotation (22), et un dispositif de mesure (18), sachant que ce dispositif de mesure (18) comprend, pour la mesure sans contact, au moins une source de rayonnement (19) pour l'émission de lumière (23) et sachant qu'une ombre (24) est produite, dans la lumière (24) émise, par le contour du corps rotatif (6),
**caractérisé en ce que**
- le dispositif de mesure (18) sans contact comprend au moins une caméra de surface (21), que la source de rayonnement (19) produit un rideau lumineux (23) en tant que lumière émise (23), et que la caméra de surface (21) reçoit la lumière émise (23) sans l'ombre (24) produite par le contour, **en ce que**
- le dispositif de mesure (18) sans contact comprend un objet de référence (30), qu'une ombre (36) est produite par l'objet de référence (30) et que la caméra matricielle (21) reçoit la lumière émise (23) sans l'ombre (36) due à l'objet de référence (30), et **en ce que**
- l'objet de référence (30) est un objet linéaire qui est tendu parallèlement à l'axe de rotation (22), ou bien un objet comportant un tranchant ou une barre.

2. Dispositif selon la revendication 1, **caractérisé en ce qu'**il comporte un deuxième moteur (29) permettant de déplacer le dispositif de mesure (18) perpendiculairement à l'axe de rotation (22).

3. Dispositif selon l'une des revendications 1 ou 2, **caractérisé en ce que** le deuxième moteur (29) déplace l'objet de référence (30) perpendiculairement à l'axe de rotation (22).

4. Dispositif selon l'une des revendications 1 ou 2, **caractérisé en ce qu'**un autre deuxième moteur (29b) déplace l'objet de référence (30) perpendiculairement à l'axe de rotation (22).

5. Dispositif selon l'une des revendications précédentes, **caractérisé en ce que** la source de rayonnement (19) irradie au moins une zone de la surface (13, 14).

6. Dispositif selon la revendication 5, **caractérisé en ce que** la source de rayonnement (19) est une source de lumière (19).

7. Dispositif selon l'une des revendications précédentes, **caractérisé en ce que** l'objet de référence (30) est immobile parallèlement à l'axe de rotation (22).

8. Dispositif selon l'une des revendications précédentes, **caractérisé en ce que** l'objet de référence (30) est une corde d'instrument tendue ou un fil tendu ou une fibre de carbone tendue.

9. Dispositif selon l'une des revendications précédentes, **caractérisé en ce qu'**un troisième moteur (45) est présent, qui déplace la source de rayonnement (19) et la caméra parallèlement à l'axe de rotation.

10. Dispositif selon l'une des revendications précédentes, **caractérisé en ce que** le dispositif de mesure (18) comprend au moins un réflecteur (20).

11. Dispositif selon l'une des revendications précédentes, **caractérisé en ce que** la caméra (21) enregistre au moins une image commune, une séquence d'images commune ou un film commun d'une zone axiale du contour du corps rotatif (6) et de la même zone axiale de l'objet de référence ou de son contour.

12. Dispositif selon la revendication 11, **caractérisé en ce qu'**est prévu un ordinateur (39) qui évalue l'image, une séquence d'images ou le film, et qui détermine ainsi la distance radiale (57) de certaines bosses (13, 53 à 55) de la surface (14) de l'axe de rotation (22).

13. Dispositif selon la revendication 12, **caractérisé en ce que** les distances radiales (57) ou les valeurs qui en sont dérivées sont stockées dans une mémoire numérique sous forme de données.

14. Système constitué d'un dispositif selon la revendication 13 et d'une machine d'impression flexographique avec au moins un groupe d'impression comprenant un cylindre de contre-pression, au moins un cylindre d'impression flexographique et au moins un rouleau tramé, et qui comprend au moins un entraînement pour régler la pression de contact entre le cylindre de contre-pression et le cylindre d'impression flexographique et/ou entre le cylindre d'impression flexographique et le rouleau tramé, **caractérisé en ce que** les données sont transmises à un ordinateur de la machine d'impression flexographique et sont utilisées lors du réglage de la pression de contact.
